# EUROPÄISCHE PATENTANMELDUNG

(11) **EP 3 466 591 A1**
(43) Veröffentlichungstag der Anmeldung: **10.04.2019**
(21) Anmeldenummer: 17195421.7
(22) Anmeldetag: 09.10.2017
(51) Int. Cl.: B23K 9/20, B23K 35/02, F16B 43/00

(54) **BOLZEN UND BEFESTIGUNGSANORDNUNG**

(71) Anmelder: HILTI Aktiengesellschaft, 9494 Schaan (LI)
(72) Erfinder: Popp, Uwe, 9443 Widnau (CH); Stahel, Simon, 7000 Chur (CH); Bertsch, Klaus, 6820 Frastanz (AT)
(74) Vertreter: Hilti Aktiengesellschaft Corporate Intellectual Property

(57) **Zusammenfassung**

Bolzen für die Befestigung eines Anbindungselements an einem Untergrund, mit einem eine Befestigungsrichtung definierenden Schaft, mit einem Dichtelement für eine Abdichtung einer Kontaktzone zwischen dem Schaft und dem Untergrund, und mit einem Kraftübertragungselement für eine Übertragung von Druckkräften des Anbindungselements auf den Untergrund.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

Bei Bolzen, welche einen Dichtring aufweisen, ist darauf zu achten, dass der Dichtring nach der Befestigung genügend verpresst ist, um eine ausreichende Dichtwirkung zu erzielen. Andererseits sollte der Dichtring nicht zu stark komprimiert sein, um nicht zu stark verformt zu werden.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund verbessert wird. Insbesondere soll ein Bereich der Befestigung verlässlich abgedichtet werden.

Diese Aufgabe ist bei einem Bolzen für die Befestigung eines Anbindungselements an einem Untergrund, mit einem eine Befestigungsrichtung definierenden Schaft, mit einem Dichtelement für eine Abdichtung einer Kontaktzone zwischen dem Schaft und dem Untergrund, und mit einem Kraftübertragungselement für eine Übertragung von Druckkräften des Anbindungselements auf den Untergrund gelöst. Das Kraftübertragungselement überträgt unter Umständen eine Anbindungskraft und/oder einer Lateralkraft senkrecht zur Befestigungsrichtung und/oder ein Biegemoment um eine Achse senkrecht zur Befestigungsrichtung und/oder ein Drehmoment um eine Achse parallel zur Befestigungsrichtung des Anbindungselements auf den Untergrund, so dass das Dichtelement nicht mit der jeweiligen Kraft beziehungsweise dem jeweiligen Moment beaufschlagt wird. Das Dichtelement ist vorzugsweise aus einem elastischen Material wie einem Elastomer, beispielsweise Gummi oder EPDM, gefertigt. Das Kraftübertragungselement ist vorzugsweise aus einem starren Material wie einem Metall, einer Legierung, Keramik oder dergleichen gefertigt.

Eine vorteilhafte Ausführungsform ist dadurch gekennzeichnet, dass das Kraftübertragungselement eine Auflagefläche für eine Auflage des Anbindungselements auf dem Kraftübertragungselement und eine Stützfläche für eine Abstützung des Kraftübertragungselements auf dem Untergrund aufweist. Bevorzugt ist ein Abstand zwischen der Auflagefläche und der Stützfläche in der Befestigungsrichtung genau so gross oder grösser als eine Länge des Dichtelements in der Befestigungsrichtung.

Ebenfalls bevorzugt weist das Kraftübertragungselement eine Andruckfläche für ein Andrücken des Dichtelements an den Untergrund auf. Besonders bevorzugt ist ein Abstand zwischen der Andruckfläche und der Stützfläche in der Befestigungsrichtung kleiner als eine Länge des Dichtelements in der Befestigungsrichtung. Ein Verhältnis des Abstands zwischen der Andruckfläche und der Stützfläche zu der Länge des Dichtelements beträgt vorzugsweise zwischen 50% und 90%.

Eine vorteilhafte Ausführungsform ist dadurch gekennzeichnet, dass eine Querschnittsfläche des Dichtelements senkrecht zur Befestigungsrichtung entlang der Befestigungsrichtung abnimmt. Dadurch steigt die Dichtfläche zwischen dem Dichtelement und dem Untergrund mit steigender Andruckkraft, mit welcher das Dichtelement gegen den Untergrund angedrückt wird.

Eine vorteilhafte Ausführungsform ist dadurch gekennzeichnet, dass der Bolzen ein Schweissbolzen, ein Setzbolzen oder ein Schraubbolzen ist.

Eine vorteilhafte Ausführungsform ist dadurch gekennzeichnet, dass das Dichtelement ringförmig ausgebildet ist, wobei das Dichtelement innen an dem Schaft anliegt und/oder aussen an dem Kraftübertragungselement anliegt.

Eine vorteilhafte Ausführungsform ist dadurch gekennzeichnet, dass das Kraftübertragungselement ringförmig ausgebildet ist.

Eine vorteilhafte Ausführungsform ist dadurch gekennzeichnet, dass das Dichtelement und/oder das Kraftübertragungselement kreisförmig ist.

Eine vorteilhafte Ausführungsform ist dadurch gekennzeichnet, dass der Bolzen ein Gewinde für ein Festschrauben des Anbindungselements an dem Bolzen aufweist

Eine vorteilhafte Ausführungsform ist dadurch gekennzeichnet, dass der Bolzen in eine Befestigungsanordnung mit einem Untergrund und einem Anbindungselement eingesetzt. Bevorzugt ist das Kraftübertragungselement zwischen dem Anbindungselement und dem Untergrund eingeklemmt.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: einen Schweissbolzen in einer Längsschnittsansicht,
- Fig. 3: einen Schweissbolzen in einer Längsschnittsansicht und
- Fig. 4: einen Schweissbolzen in einer Längsschnittsansicht.

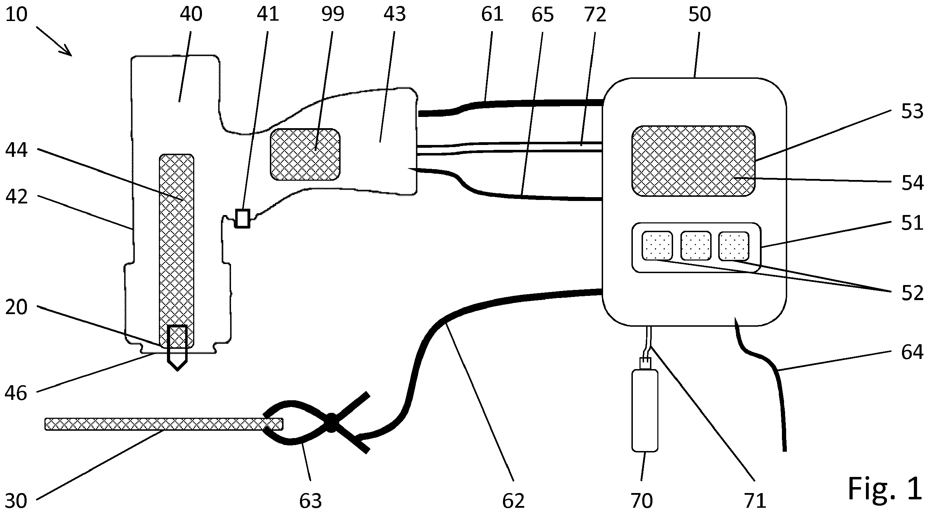

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

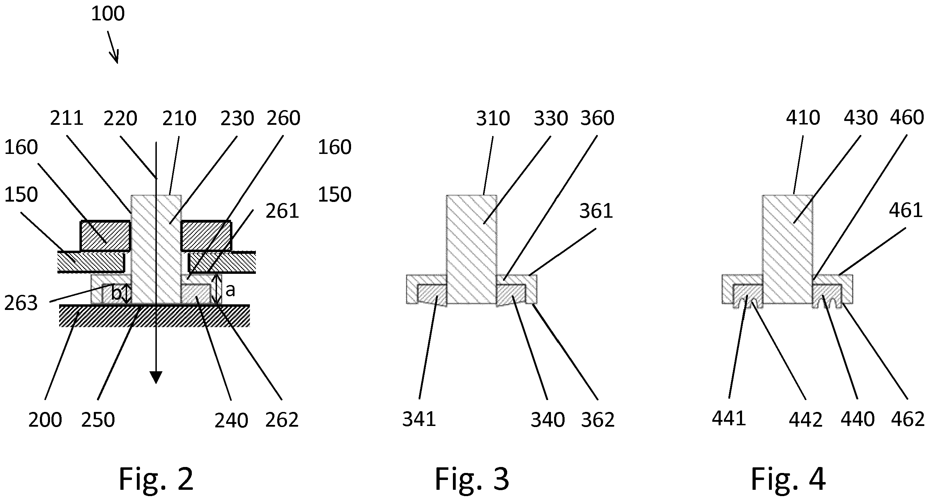

In Fig. 2 ist eine Befestigungsanordnung 100 mit einem Anbindungselement 150, einem Untergrund 200 und einem Bolzen 210 für die Befestigung des Anbindungselements 150 an dem Untergrund 200 in einem Längsschnitt dargestellt. Der Bolzen 210 weist einen eine Befestigungsrichtung 220 definierenden Schaft 230, ein Dichtelement 240 für eine Abdichtung einer Kontaktzone 250 zwischen dem Schaft und dem Untergrund und ein Kraftübertragungselement 260 für eine Übertragung von Druckkräften des Anbindungselements 150 auf den Untergrund 200 auf. Das kreisringförmige Dichtelement 240 liegt innen an dem Schaft 230 und aussen an dem ebenfalls kreisringförmigen Kraftübertragungselement 260 an.

Der Bolzen 210 ist beispielsweise als Schweissbolzen, Setzbolzen oder Schraubbolzen ausgebildet, wobei die Kontaktzone 250 dann als Schweissnaht oder Fügespalt oder sonstige Fügestelle ausgebildet ist, und mit einem Gewinde 211 versehen. Ein als Schraubenmutter ausgebildetes Halteelement 160 ist an dem Bolzen 210 befestigt, im vorliegenden Beispiel auf das Gewinde 211 aufgeschraubt, um das Anbindungselement 150 an dem Bolzen 210 und damit an dem Untergrund 200 festzulegen.

Das Kraftübertragungselement 260 weist eine Auflagefläche 261 für eine Auflage des Anbindungselements 150 auf dem Kraftübertragungselement 260 und eine Stützfläche 262 für eine Abstützung des Kraftübertragungselements 260 auf dem Untergrund auf. Ein Abstand a zwischen der Auflagefläche 261 und der Stützfläche 262 in der Befestigungsrichtung 220 ist genau so gross wie eine Länge des Dichtelements 240 in der Befestigungsrichtung 220. Dadurch überträgt das Kraftübertragungselement 260 eine Anbindungskraft des Anbindungselements auf den Untergrund, ohne das Dichtelement mit der vollen Anbindungskraft zu beaufschlagen. Das Kraftübertragungselement 260 ist dann zwischen dem Anbindungselement 150 und dem Untergrund 200 eingeklemmt.

Das Kraftübertragungselement 260 überträgt lediglich eine Andruckkraft auf das Dichtelement 240, um das Dichtelement 240 an den Untergrund 200 anzudrücken. Hierfür weist das Kraftübertragungselement 260 eine Andruckfläche 263 auf, deren Abstand b zur Stützfläche 262 in der Befestigungsrichtung 220 kleiner ist als eine Länge des Dichtelements 240 in der Befestigungsrichtung 220, wenn das Dichtelement 240 entspannt ist. Ein Verhältnis des Abstands b zu der Länge des entspannten Dichtelements beträgt beispielsweise 75%. Das Dichtelement 240 wird dann entsprechend komprimiert, um seine Dichtwirkung zu entfalten. Die Dichtwirkung ist unabhängig von der Anbindungskraft, also auch unabhängig von einer Kraft, mit welcher das Halteelement 160 an dem Bolzen 210 befestigt wird.

In Fig. 3 ist ein Bolzen 310 für die Befestigung eines nicht gezeigten Anbindungselements an einem nicht gezeigten Untergrund in einem Längsschnitt dargestellt. Der Bolzen 310 weist einen eine Befestigungsrichtung definierenden Schaft 330, ein Dichtelement 340 für eine Abdichtung einer Kontaktzone zwischen dem Schaft 330 und dem Untergrund und ein Kraftübertragungselement 360 für eine Übertragung von Druckkräften des Anbindungselements auf den Untergrund auf. Das kreisringförmige Dichtelement 340 liegt innen an dem Schaft 330 und aussen an dem ebenfalls kreisringförmigen Kraftübertragungselement 360 an.

Das Kraftübertragungselement 360 weist eine Auflagefläche 361 für eine Auflage des Anbindungselements auf dem Kraftübertragungselement 360 und eine Stützfläche 362 für eine Abstützung des Kraftübertragungselements 360 auf dem Untergrund auf. Eine in Befestigungsrichtung weisende Stirnseite 341 des Dichtungselements 340 ist abgeschrägt, so dass eine Querschnittsfläche des Dichtelements 340 senkrecht zur Befestigungsrichtung entlang der Befestigungsrichtung abnimmt. Dadurch steigt die Dichtfläche zwischen dem Dichtelement 340 und dem Untergrund mit steigender Andruckkraft, mit welcher das Dichtelement 340 gegen den Untergrund angedrückt wird.

In Fig. 4 ist ein Bolzen 410 für die Befestigung eines nicht gezeigten Anbindungselements an einem nicht gezeigten Untergrund in einem Längsschnitt dargestellt. Der Bolzen 410 weist einen eine Befestigungsrichtung definierenden Schaft 430, ein Dichtelement 440 für eine Abdichtung einer Kontaktzone zwischen dem Schaft 430 und dem Untergrund und ein Kraftübertragungselement 460 für eine Übertragung von Druckkräften des Anbindungselements auf den Untergrund auf. Das kreisringförmige Dichtelement 440 liegt innen an dem Schaft 430 und aussen an dem ebenfalls kreisringförmigen Kraftübertragungselement 460 an.

Das Kraftübertragungselement 460 weist eine Auflagefläche 461 für eine Auflage des Anbindungselements auf dem Kraftübertragungselement 460 und eine Stützfläche 462 für eine Abstützung des Kraftübertragungselements 460 auf dem Untergrund auf. Eine in Befestigungsrichtung weisende Stirnseite 441 des Dichtungselements 440 weist zwei umlaufende Ausnehmungen 4432, insbesondere Nuten, auf, so dass eine Querschnittsfläche des Dichtelements 440 senkrecht zur Befestigungsrichtung entlang der Befestigungsrichtung abnimmt. Dadurch steigt die Dichtfläche zwischen dem Dichtelement 440 und dem Untergrund mit steigender Andruckkraft, mit welcher das Dichtelement 440 gegen den Untergrund angedrückt wird.

Eine Herstellung des Dichtelements geschieht vorzugsweise durch Ausschneiden aus Plattenmaterial, Prägen, Spritzgiessen oder ähnliche Verfahren. Insbesondere beim Spritzgiessen ist eine gezielte Formgebung vorteilhaft, durch welche eine Flächenpressung des Dichtelements lokal erhöht und/oder ein Verlauf der Flächenpressung über einem Anpressweg so eingestellt wird, dass die Dichtfunktion auch bei wechselndem Anpressweg gewährleistet ist.

Um Beschädigungen einer gegebenenfalls vorhandenen Untergrundbeschichtung zu vermeiden, ragt bei einem nicht gezeigten Ausführungsbeispiel ein radial äusserer Bereich des Dichtelements zwischen das Kraftübertragungselement und den Untergrund. Bei weiteren nicht gezeigten Ausführungsbeispielen sind das Dichtelement und das Kraftübertragungselement einstückig aus demselben Material gefertigt. Beispielsweise wird dann durch eine geeignete Formgebung (insbesondere mit Rillen wie in Fig. 4 gezeigt) ein mit dem Anpressweg zunächst elastisches Verhalten und später eine deutlich erhöhte Steifigkeit erreicht.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Bolzen für die Befestigung eines Anbindungselements an einem Untergrund, mit einem eine Befestigungsrichtung definierenden Schaft, mit einem Dichtelement für eine Abdichtung einer Kontaktzone zwischen dem Schaft und dem Untergrund, und mit einem Kraftübertragungselement für eine Übertragung von Druckkräften des Anbindungselements auf den Untergrund.

2. Bolzen nach Anspruch 1, wobei das Kraftübertragungselement eine Auflagefläche für eine Auflage des Anbindungselements auf dem Kraftübertragungselement und eine Stützfläche für eine Abstützung des Kraftübertragungselements auf dem Untergrund aufweist.

3. Bolzen nach Anspruch 2, wobei ein Abstand zwischen der Auflagefläche und der Stützfläche in der Befestigungsrichtung genau so gross oder grösser ist als eine Länge des Dichtelements in der Befestigungsrichtung.

4. Bolzen nach Anspruch 2, wobei das Kraftübertragungselement eine Andruckfläche für ein Andrücken des Dichtelements an den Untergrund aufweist.

5. Bolzen nach Anspruch 4, wobei ein Abstand zwischen der Andruckfläche und der Stützfläche in der Befestigungsrichtung kleiner ist als eine Länge des Dichtelements in der Befestigungsrichtung.

6. Bolzen nach Anspruch 5, wobei ein Verhältnis des Abstands zwischen der Andruckfläche und der Stützfläche zu der Länge des Dichtelements zwischen 50% und 90% beträgt.

7. Bolzen nach einem der Ansprüche 5 bis 6, wobei eine Querschnittsfläche des Dichtelements senkrecht zur Befestigungsrichtung entlang der Befestigungsrichtung abnimmt.

8. Bolzen nach einem der vorhergehenden Ansprüche, wobei der Bolzen ein Schweissbolzen, ein Setzbolzen oder ein Schraubbolzen ist.

9. Bolzen nach einem der vorhergehenden Ansprüche, wobei das Dichtelement ringförmig ausgebildet ist, und wobei das Dichtelement innen an dem Schaft anliegt und/oder aussen an dem Kraftübertragungselement anliegt.

10. Bolzen nach einem der vorhergehenden Ansprüche, wobei das Kraftübertragungselement ringförmig ausgebildet ist.

11. Bolzen nach einem der vorhergehenden Ansprüche, wobei das Dichtelement und/oder das Kraftübertragungselement kreisförmig ist.

12. Bolzen nach einem der vorhergehenden Ansprüche, wobei der Bolzen ein Gewinde für ein Festschrauben des Anbindungselements an dem Bolzen aufweist

13. Befestigungsanordnung mit einem Untergrund, einem Bolzen und einem Anbindungselement, wobei der Bolzen nach einem der vorhergehenden Ansprüche ausgebildet ist.

14. Befestigungsanordnung nach Anspruch 13, wobei das Kraftübertragungselement zwischen dem Anbindungselement und dem Untergrund eingeklemmt ist.
